Europäisches Patentamt

**European Patent Office**

Office européen des brevets

(19)

(11) Publication number: **0 221 631**
A2

(12)

# EUROPEAN PATENT APPLICATION

(21) Application number: **86305942.4**

(22) Date of filing: **01.08.86**

(51) Int. Cl.⁴ **H04N 7/18** , **G11B 27/32** , **G11B 15/02**

(30) Priority: **24.10.85 GB 8526260**

(43) Date of publication of application:
**13.05.87 Bulletin 87/20**

(84) Designated Contracting States:
**AT BE CH DE FR GB IT LI LU NL SE**

(71) Applicant: **Videoscan Limited**
**Oxford Road Mill**
**Macclesfield Cheshire(GB)**

(72) Inventor: **May, Richard Frederick**
**Long Ridge Sutton**
**Macclesfield Cheshire(GB)**

(74) Representative: **McNeight, David Leslie et al**
**McNeight & Lawrence Regent House Heaton**
**Lane**
**Stockport Cheshire SK4 1BS(GB)**

(54) **Methods and apparatus for monitoring events.**

(57) Thers is disclosed a method for monitoring events spaced apart in time comprising the steps of identifying the events to be monitored and automatically recording and playing back only the identified events whereby the time required for monitoring is less than the time over which the events are spaced apart.

## METHODS AND APPARATUS FOR MONITORING EVENTS

This invention relates to methods and apparatus for monitoring events.

In many situations it is desirable to monitor events for example by a video camera for security purposes. One such typical situation is the monitoring of checkouts in retail stores for "shrinkage" control -shrinkage being descriptive of losses through theft some of which is shoplifting but of which a major proportion occurs at the cash till.

If such monitoring is not to be carried out on a 'real time' basis by a security guard looking at a bank of screens, one for each checkout, it is necessary to record the output of the video cameras. It is convenient to mention here that in British Patent Publication No. GB-A-2 140 650 is described a system where the video image has superimposed till data extracted digitally from the till, and that such data records along with the video image. However monitoring depends upon playing back the recording, and this is also a real if delayed time operation.

The present invention provides improvements on this system which improve monitoring efficiency.

The invention in broad aspect comprises a method for monitoring such events spaced apart in time comprising the steps of identifying the events to be monitored and automatically recording and playing back only the identified events whereby the time required for monitoring is less than the time over which the events are spaced apart.

It is of course known to equip audio tape recorders with voice or sound actuated switches so that the recorder only records when a sound is detected. And telephone answering machines record only for the time a party is connected to the number being monitored.

The present invention goes beyond this in introducing an element of selection from among possible events of only those identified for monitoring requirements and in particular introduces the possiblity of a single monitoring system being able to cover a plurality of event areas and a plurality of event types so that only those events at a particular area and/ or of a particular type can be selected for recording and/or playback, the area and/or type being itself selectable as desired using, for example, suitable software in a computer-controlled system.

In one arrangement, a recording is made of an event area for the whole time over which the events are spaced and only those portions of the recording are played back which are associated with the identified events.

Different sets of events may be identified and portions of the recording associated with only one or some of said sets played back.

The recording may be made on video and/or audio recording medium and playback controlled by a controller associating the identified events with positions on the said medium. Said recording medium may comprise magnetic recording tape.

The medium may itself carry control signals locating the occurrence of events. Said control signals may effect playback from the recording medium for a predetermined time period, the controller then searching for the next said control signal. Further control signals, however, on the recording medium may locate the ends of events and playback may then be effected for the recording between a control signal locating the occurrence and a further control signal locating the end of an event, the controller then searching for the next said control signal.

The controller, on the other hand, may comprise memory separate from the recording medium and storing event data and controlling playback in accordance with said data.

Said controller may comprise a micro-computer or a micro-processor.

The event area may be monitored over the whole event time, only events identified, however, being recorded. This recording too may be made on magnetic video and/or audio recording medium.

Multiple event areas may be connected to common recording means. Such multiple event areas may be constantly monitored, an event occurring in one of said areas switching said one area automatically to said common recording means.

An event occurring in one of said areas during recording of an event in another of said areas may be buffered while the event in said other area is recorded.

The method may be applied to monitoring a cash till at a retail checkout in which a video camera monitors events in the checkout area, events for monitoring being selected by cash till actuation. Text imager means may insert cash till data into a video image for display and recording. Such cash till data, however, may also be stored independently of video images -and used -since all such data may be stored, for example, on tape or magnetic disc -for audit purposes.

A plurality of tills may be monitored, till data being buffered while data from another till is being recorded.

Simultaneous events selected for video monitoring in a plurality (say up to four) of checkout areas can be displayed on a split video screen and recorded as such.

The invention also comprises apparatus for monitoring events spaced apart in time comprising event identifying means and event recording and playback means connected with said event identifying means and playingaback only identified events whereby the time required for monitoring such events is less than the time over which the events are spaced apart.

Embodiments of apparatus and methods for monitoring events spaced apart in time will now be described with reference to the accompanying drawings, in which:-

Figure 1 is a diagrammatic illustration of one embodiment of apparatus,
and

Figure 2 is a diagrammatic illustration of another embodiment of apparatus.

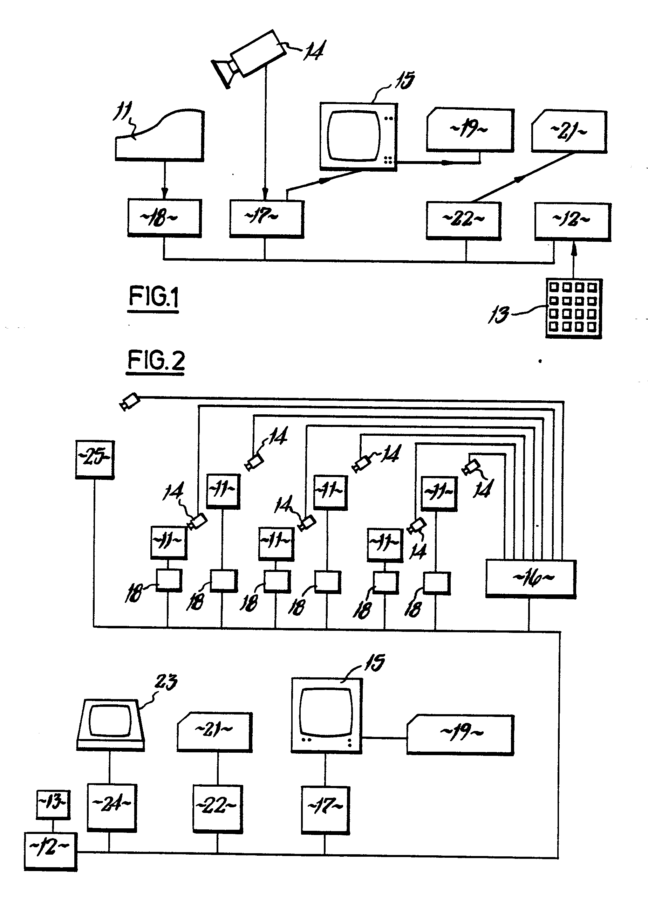

The drawings illustrate methods and apparatus for monitoring events spaced apart in time. The events to be monitored are in all cases for purposes of illustration only the events that take place at retail store checkouts, namely the totalling on electronic cash tills of the prices of goods purchased and the taking of payment for the same. Figures 1 to 4 therefore include a till or tills 11.

Events to be monitored are selected automatically from the stream of real time events occurring there according to predetermined criteria. It may be decided for example that the majority of "shrinkage" occurring at checkout is associated with purchases totalling less than say £10 in value. Or it might be determined that the majority of shrinkage is associated with purchases totalling more than £10 in value. It could be arranged in the first case that the video output be automatically switched to record and the recorder switched on to record (if it is not already) as soon as the 'total' key is pressed when the amount standing in the accumulator is £10 or less. In the second case, the recording will begin automatically as soon as the amount in the accumulator reaches £10 and the total key has not been pressed.

Other criteria could of course be used -it might for example be arranged to begin recording whenever one of a certain number of prices is rung up - prices for example that do not correspond to any product currently being sold. Or a more sophisticated approach might be to analyse purchases statistically and to begin recording whenever an unusual combination of prices is encountered.

A central processor 12 with an associated keypad 13 can be used to carry out the logic and arithmetic operations associated with event selection and switching. The processor 12 can be programmed so that the criteria can be changed by keyboard-entered commands.

A video camera 14 is associated with the till or each till 11, and a video monitor 15 is connected to the camera 14 or via switching device 16 to the cameras 14 in the multi-till system shown in Figure 2.

A text imager 17 receives till data from a till interface unit 18 (which includes a buffer in the multi-till system holding till data until the central processor is able to accept it) and produces a text overlay or inset for the video monitor 15 so that not only the video image from the camera 14 but also till data appear on the monitor screen.

The monitor 15 is connected to a video cassette recorder 19 which is itself controlled by the central processor 12 so as, in the case of the embodiment shown in Figure 1, to record only when an event is identified as one which should be recorded, recording being terminated either after a predetermined time lapse or when the end of an event is detected. The event might as above described be selected to be the accumulation of a charge of £10 or more without the total key being pressed on the till 11. It being expected that the average transaction thereafter does not exceed say three minutes in duration, the recording might be terminated after that time. Or the operation of the total key on the till 11 might be taken as a signal to initiate termination of recording.

In an alternative manner of operating the embodiment illustrated in Figure 1, the video cassette recorder 19 is operational to record everything imaged in the camera 14 but the occurrence of an identified event is noted in such manner that all events so identified can be replayed, skipping the rest of the recording. As before, the beginning of an event can trigger a playback time of, say, three minutes before skipping to the next recorded event identifier. Or an event-end signal can terminate playback and initiate fast forward to the next event identifier.

The beginning and if used the end markers can be signals applied to the video tape itself, being detected by a special head or an audio head for example and controlling the fast forward and playback operations of the recorder. Or the central processor 12 can store time information about identified events and itself, through a suitable interface or a user port, operate the controls of the recorder 19. In this way, different sets of events might be identified by different identification data. It might be desired to be able to watch, at will, all those transactions for which the total is £10 or less or all transactions in which a specific price appeared, and these sets of events would be assigned different identities. Some events might of course belong to both sets of events.

A record of all transactions at every till can be taken from this system in another tape recorder 21 - (or on magnetic disc or other conventional recording medium) through a tape output interface 22, the till data being fed therethrough as it is released from the buffered till interface units 18.

An additional feature of the multi-till system of Figure 2 is the provision of a separate computer 23 receiving information through a suitable interface 24 from the tills and programmable to process it as required for performance evaluation or analysis.

Events other than checkout transactions, and the status of equipment such as refrigerated display units or of environmental conditions such as temperature and humidity can also be monitored. In a jeweller's shop, for example, a display cabinet could be monitored whenever it was unlocked or whenever staff or customers were in proximity to it. Staff could be equipped with active or passive electronic tokens which would de-activate the proximity sensor so that only those occasions when unaccompanied customers were in proximity to high-value items would be recorded. The use of such tokens is well known in other security. Such additional sensors and cameras are indicated generally at 25.

As before, the video recorder might be operated continuously, and events selected for playback according to different criteria. It could for example be arranged to select all recorded transactions from say camera 1 or camera 2 or cameras 1 and 2, or it could be arranged to replay all transactions totalling more than £10 from cameras 3 and 4 or from all cameras.

Where two or more -possibly up to four - cameras are observing events the criteria dictate to be recordable, they may, by suitable electronic processing, be displayed on a split screen on the monitor 15 and recorded in that fashion. Obviously, however, in a large store, or where many events will meet the criteria, it may be necessary to provide more than one video recorder.

The multi-till system therefore permits both selective recording and selective playback.

## Claims

1. A method for monitoring events spaced apart in time comprising the steps of identifying the events to be monitored and automatically recording and playing back only the identified events whereby the time required for monitoring is less than the time over which the events are spaced apart.

2. A method according to claim 1, in which a recording is made of the event area for the whole time over which the events are spaced, and only those portions of the recording are played back which are associated with the identified events.

3. A method according to claim 2, in which different sets of events are identified and portions of the recording associated only with one or some of said sets are played back.

4. A method according to claim 2 or claim 3, in which the recording is made on video and/or audio recording medium and playback is controlled by a controller associating the identified events with positions on the said medium.

5. A method according to claim 4, in which the said recording medium comprises magnetic recording tape.

6. A method according to claim 4 or claim 5, in which the recording medium itself carries control signals locating the occurence of events.

7. A method according to claim 6, in which the said control signals effect playback from the recording medium for a predetermined time period and the controller then searches for the next said control signal.

8. A method according to claim 6, in which further control signals on the recording medium locate the ends of events and playback is effected for the recording between a control signal locating the occurence and a further control signal locating the end of an event, the controller then searching for the next said control signal.

9. A method according to claim 4, in which the controller comprises memory separate from the recording medium and storing event data and controlling playback in accordance with said data.

10. A method according to any one of claims 4 to 9, in which said controller comprises a microcomputer or microprocessor.

11. A method according to claim 1, in which the event area is monitored over the whole event time, only events identified being recorded.

12. A method according to claim 11, in which the recording is made on video and/or audio recording medium.

13. A method according to any one of claims 1 to 12, in which multiple event areas are connected to common recording means.

14. A method according to claim 13, in which multiple event areas are continuously monitored, an event occurring in one of said areas switching said one area to said common recording means.

15. A method according to claim 14, an event occurring in one of said areas during recording of an event in another of said areas being buffered while the event in said other areas is recorded.

16. A method according to any one of claims 1 to 15 applied to monitoring a cash till at a retail checkout, in which a video camera monitors events in the checkout area, events for monitoring being selected by cash till actuation.

17. A method according to claim 16, in which text imager means insets cash till data into a video image for display and recording.

18. A method according to claim 16 or 17, in which cash till data are stored independently of video images.

19. A method according to claim 18, in which cash till data are stored on magnetic medium separate from a video tape.

20. A method according to any one of claims 16 to 19, in which a plurality of tills is monitored, till data being buffered while data from another till is being recorded.

21. A method according to any one of claims 16 to 20, in which simultaneous events selected for video monitoring in a pluralty of checkout areas are displayed on a split video screen and recorded as such.

22. Apparatus for monitoring events spaced apart in time comprising event identifying means and event recording and playback means connected with said event identifying means for recording and playing back only identified events whereby the time required for monitoring such events is less than the time over which the events are spaced apart.

23. Apparatus according to claim 22, in which the events to be monitored are imaged by a video camera connected to a video recorder and events are selected for monitoring by event identifying means other than the video camera.

24. Apparatus according to claim 23, the said event identifying means comprising a cash till transaction monitoring device.

25. Apparatus according to claim 24, said cash till having a digital data output and said transaction monitoring device being programmable to assign criteria by which monitored events are to be selected.

26. Apparatus according to any one of claims 22 to 25, comprising a plurality of video cameras, a corresponding pluraltiy of event identifying means and a single video recorder switchably connected to record images from said video cameras according as an event is identifed for monitoring by one or other of said event identifying means.

FIG.1

FIG.2